# EUROPEAN PATENT APPLICATION

(11) **EP 4 764 635 A1**
(43) Date of publication of application: **24.06.2026**
(21) Application number: 25154597.6
(22) Date of filing: 29.01.2025
(51) Int. Cl.: G02B 6/293, G02B 6/42, G02F 1/01

(54) **OPTICAL RECEIVER AND OPTICAL MODULE WITH MULTIPLE WAVELENGTH TUNABLE FILTERS**

(30) Priority: 20.12.2024 KR 20240192971
(71) Applicant: Phovel Co. Ltd., Daejeon 34302 (KR)
(72) Inventor: KIM, Jeong Soo, 30056 24, Jeonwonmaeul 1-gil, Janggun-myeon,Sejong-si (KR); PARK, Soo Jeong, 34011 25, Gujeuk-ro, Yuseong-gu, Daejeon (KR)
(74) Representative: von Bülow & Tamada

(57) **Abstract**

Provided are an optical receiver and an optical module with multiple wavelength tunable filters, the module including: a thermoelectric element disposed on a substrate and having a changeable temperature; a first wavelength tunable filter having one end disposed on one side of the thermoelectric element and the other end inclined by being disposed lower than a plane of the thermoelectric element; a second wavelength tunable filter including a heater disposed at one side, disposed on the one side of the thermoelectric element while being disposed above the first wavelength tunable filter; a first detector disposed on the substrate while being spaced apart from the thermoelectric element; and a second detector disposed above the substrate while being spaced apart from the first detector.

## Description

### BACKGROUND

### Field

The present disclosure relates to an optical receiver with multiple wavelength tunable filters.

### Description of the Related Art

Currently, a standard referred to as next generation-passive optical network version 2 (NG-PON2) has been agreed upon worldwide, and this NG-PON2 standard sets four channels of wavelengths having a signal speed of 10 Gbps as a downlink optical signal from a central office to a subscriber. The wavelength interval of these four channels may be set to 100 GHz or 200 GHz.

According to this NG-PON2 standard, one subscriber is required to select one wavelength for optical reception, and such a wavelength separation may be achieved using a method of receiving the downlink optical signal by inputting a channel optical signal of a specific wavelength into an optical receiver using a fixed device that separates the wavelengths. However, the optical receiver, which separates these fixed wavelengths into specific optical fibers and performs the optical reception regardless of a type of wavelength coupled to the specific optical fiber, is unable to dynamically allocate optical paths, thus making it difficult to manage the optical paths.

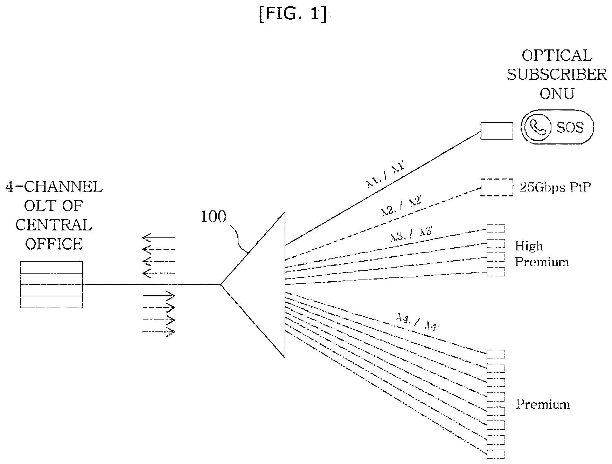

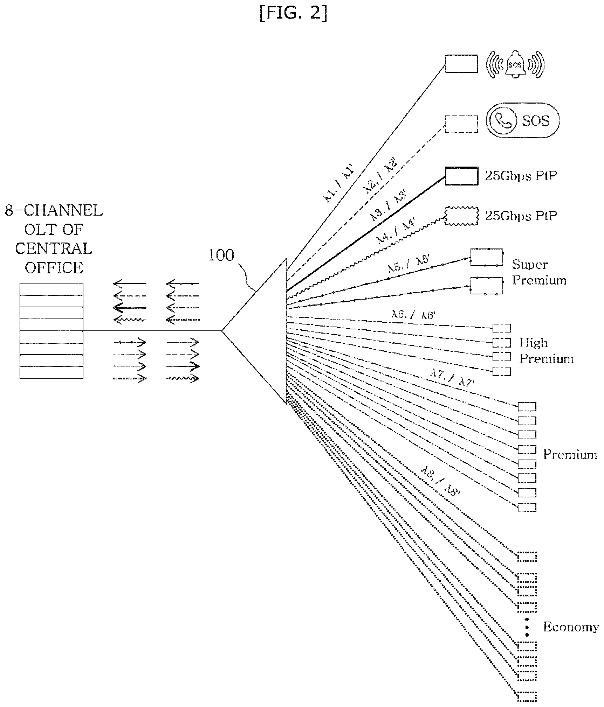

FIGS. 1 and 2 are views for describing a next generation passive optical network (NG-PON2) tunable wavelength division multiplexing-passive optical network (TWDM-PON) communication network.

FIG. 1 shows the next generation passive optical network (NG-PON2) tunable wavelength division multiplexing-passive optical network (TWDM-PON) communication network with four wavelength channels. In the four-channel NG-PON2, each subscriber may establish communication by transmitting data to a central office by using a wavelength of a channel allocated to the subscriber during a time allocated to the subscriber, and receiving data transmitted from the central office to the subscriber by using the time and wavelength channel allocated to the subscriber.

In the TWDM-PON, four optical line terminal (OLT) optical modules of the central office and 32 or up to 64 subscriber optical modules may form one set to establish a communication network, and each subscriber may use a specified wavelength channel to communicate with a plurality of subscribers by segmenting the channel in time. A splitter 100 is a passive device for simply segmenting and supplying optical power equally to the plurality of subscribers. The splitter does not have a function of setting the optical path based on the wavelength. The optical power transmitted from an optical line terminal (OLT) of the central office may be equally distributed by the optical splitter regardless of the wavelength and transmitted to a subscriber optical network unit (ONU), and an optical device of the subscriber ONU may establish the communication by using the wavelength of the channel allocated to the subscriber. In NG-PON2, four channels may be used to provide various transmission characteristics to each channel, and the communication characteristics of the subscriber may be changed by changing the wavelength allowed to the subscriber based on the transmission characteristics of each channel. Therefore, in the case of four-channel wavelength tunability, communication characteristics may be set separately for up to four wavelengths, thus allowing for the establishment of a more effective communication network.

Referring to FIG. 2, it may be seen that using eight-channel wavelengths may provide more various services than using four-channel wavelengths. Increasing the number of wavelength-tunable communication channels from four to eight channels may bring significant economic benefits, as compared to the existing NG-PON2 that may establish different types of communication by using four different wavelengths, because more various services may be provided when the allowed channels are increased to eight channels.

However, increasing the number of channels may cause an increased variable temperature range of the wavelength tunable filter, which may result in various problems. In detail, the wavelength interval of four channels according to the NG-PON2 standard may have the wavelength interval of 100 GHz, and the wavelength tunable filter (e.g., etalon filter) may have a transmittance wavelength change due to a temperature of 10GHz/°C. In this case, a wavelength interval between a first channel and a fourth channel may be 300 GHz, and a temperature of the wavelength tunable filter may need to be changed by at least 30°C in order to change a reception channel. If this standard is applied to eight channels, the wavelength interval between a first channel and an eighth channel may be 700 GHz, and the temperature of the wavelength tunable filter may need to be changed by at least 70°C in order to receive the reception channels. Such a large temperature change described above may cause problems such as durability of various parts inside the optical receiver being impaired due to the large temperature change, airtightness issues occurring due to a reduced long-term reliability of epoxy or the like used for assembly or a similar process, and large power consumption being required due to the large temperature change.

### SUMMARY

An object of the present disclosure is to provide an optical receiver and an optical module with multiple wavelength tunable filters, in which the multiple wavelength tunable filters are used to increase the reliability of an optical reception device by reducing a temperature change degree of a wavelength tunable filter compared to a case of using one wavelength tunable filter when receiving multiple channels.

According to an embodiment of the present disclosure, provided is an optical module with multiple wavelength tunable filters, the module including: a thermoelectric element disposed on a substrate and having a changeable temperature; a first wavelength tunable filter having one end disposed on one side of the thermoelectric element and the other end inclined by being disposed lower than a plane of the thermoelectric element, and configured to transmit only a first wavelength of a received signal that is changed based on the temperature of the thermoelectric element; a second wavelength tunable filter including a heater disposed at one side, disposed on the one side of the thermoelectric element while being disposed above the first wavelength tunable filter, and configured to transmit only a second wavelength of the received signal that is changed based on temperatures of the thermoelectric element and the heater; a first detector disposed on the substrate while being spaced apart from the thermoelectric element, disposed on an optical axis of the received signal, and configured to detect a signal corresponding to one channel transmitted through the first wavelength tunable filter among multiple-channel signals being transmitted through the second wavelength tunable filter, the multiple-channel signals being transmitted therethrough among N reception-channel signals being received; and a second detector disposed above the substrate while being spaced apart from the first detector, and configured to detect the signal transmitted through the second wavelength tunable filter and then reflected from the first wavelength tunable filter.

The thermoelectric element may include an inclined surface disposed on the one side of the thermoelectric element and inclined at a certain angle relative to the plane of the thermoelectric element, and the first wavelength tunable filter may be inclined by being coupled with the inclined surface.

The thermoelectric element may include an accommodating groove therein, the groove having an accommodating groove inclination surface inclined at a certain angle relative to the plane of the thermoelectric element, and the first wavelength tunable filter may be inclined by being accommodated on the accommodating groove inclination surface.

The thermoelectric element may include a protrusion including a protrusion inclined surface inclined at a certain angle relative to the plane of the thermoelectric element, and the first wavelength tunable filter may be inclined by being coupled with the protrusion inclined surface.

The second detector may be disposed on a path of the signal ultimately going downward after repeating a process in which the signal transmitted through the second wavelength tunable filter is reflected from an upper surface of the first wavelength tunable filter and then reflected from a lower surface of the second wavelength tunable filter because the first wavelength tunable filter is inclined.

The first wavelength tunable filter may have a first wavelength interval smaller than an entire wavelength interval between N reception channels, and the second wavelength tunable filter may have a second wavelength interval smaller than the wavelength interval between the N reception channels, the first wavelength interval and the second wavelength interval being different from each other.

The heater may be configured to regulate a temperature of the second wavelength tunable filter.

The heater may be in direct contact with the second wavelength tunable filter, and the second wavelength tunable filter may further include a reflective coating layer disposed on the upper part or lower part of the second wavelength tunable filter, excluding a region where the heater is disposed.

The second wavelength tunable filter may further include a reflective coating layer disposed on at least one of the upper part and lower part of the second wavelength tunable filter, and the heater may be disposed on the reflective coating layer.

The second wavelength tunable filter may further include an electrode disposed at a position corresponding to a lower surface of the heater and connected to the heater, and a conductive resistor having an electric resistance lower than that of the second wavelength tunable filter, and disposed around the electrode while being disposed at a position corresponding to the lower surface of the heater.

The module may further include a heat shielding member disposed between the top of the thermoelectric element and the bottom of the second wavelength tunable filter, and be configured to impede heat generated by the heater from being transferred to the thermoelectric element, thereby producing a temperature difference between the thermoelectric element and the heater.

The wavelength of the first wavelength tunable filter may be determined based on a temperature change by the thermoelectric element, and the wavelength of the second wavelength tunable filter may be determined based on temperature changes by the thermoelectric element and the heater.

The module may further include a trans-impedance amplifier disposed on top of the substrate, and the second detector may be disposed on top of the trans-impedance amplifier.

According to another embodiment of the present disclosure, an optical receiver with multiple wavelength tunable filters, the receiver including: a thermoelectric element disposed on a substrate and having a changeable temperature; a first wavelength tunable filter having one end disposed on one side of the thermoelectric element and the other end inclined by being disposed lower than a plane of the thermoelectric element, and configured to transmit only a first wavelength of a received signal that is changed based on the temperature of the thermoelectric element; a second wavelength tunable filter including a heater disposed at one side, disposed on the one side of the thermoelectric element while being disposed above the first wavelength tunable filter, and configured to transmit only a second wavelength of the received signal that is changed based on temperatures of the thermoelectric element and the heater; a first detector disposed on the substrate while being spaced apart from the thermoelectric element, disposed on an optical axis of the received signal, and configured to detect a signal corresponding to one channel transmitted through the first wavelength tunable filter among multiple-channel signals being transmitted through the second wavelength tunable filter, the multiple-channel signals being transmitted therethrough among N reception-channel signals being received; a second detector disposed above the substrate while being spaced apart from the first detector, and configured to detect the signal transmitted through the second wavelength tunable filter and then reflected from the first wavelength tunable filter; and a control unit configured to determine which of the first wavelength tunable filter and the second wavelength tunable filter the signal is transmitted through, based on the signals detected by the first detector and the second detector.

The control unit may be configured to determine that the signal corresponding to any one of N reception channels is not transmitted through the second wavelength tunable filter if the signal is detected by neither the first detector nor the second detector, determine that the signal corresponding to any one of the N reception channels is transmitted through the second wavelength tunable filter rather than through the first wavelength tunable filter if the signal is detected by the second detector rather than by the first detector, and determine that the signal corresponding to any one of the channels is normally received by being transmitted through both the first wavelength tunable filter and the second wavelength tunable filter if the signal is detected by the first detector rather than by the second detector.

The control unit may be configured to change the wavelength of the second wavelength tunable filter by changing the temperatures of the thermoelectric element and the heater until the signal is detected by the second detector, set a temperature of the second wavelength tunable filter at which the signal is detected by the second detector to its set temperature, then change the temperature of the thermoelectric element until the signal is detected by the first detector by being transmitted through the second wavelength tunable filter and then also through the first wavelength tunable filter while controlling the set temperature of the second wavelength tunable filter to be maintained using the heater, and set a temperature of the first wavelength tunable filter at which the signal is detected by the first detector to its set temperature.

### BRIEF DESCRIPTION OF THE DRAWINGS

FIGS. 1 and 2 are views for describing a next generation passive optical network (NG-PON2) tunable wavelength division multiplexing-passive optical network (TWDM-PON) communication network.
FIG. 3 is a view for describing an optical receiver and an optical module with multiple wavelength tunable filters according to an embodiment of the present disclosure.
FIGS. 4 and 5 are views for describing a process of selecting a wavelength using one wavelength tunable filter, and FIG. 6 is a view for describing a process of selecting a wavelength using the multiple wavelength tunable filters.
FIGS. 7, 8, and 9 are views for describing a coupling configuration of a thermoelectric element and a first wavelength tunable filter according to an embodiment of the present disclosure.
FIG. 10 is a view for describing a coupling configuration of the thermoelectric element and the first wavelength tunable filter according to another embodiment of the present disclosure.
FIG. 11 is a view for describing a coupling configuration of the thermoelectric element and the first wavelength tunable filter according to yet another embodiment of the present disclosure.
FIG. 12 is a view for describing an optical receiver and an optical module with multiple wavelength tunable filters according to another embodiment of the present disclosure.
FIGS. 13 and 14 are views for describing a resistor formed in a second wavelength tunable filter according to an embodiment of the present disclosure.
FIG. 15 is a view for describing transmittance of an optical signal based on an incident angle relative to an optical axis of the second wavelength tunable filter.

### DETAILED DESCRIPTION

Hereinafter, detailed contents for embodying the present disclosure will be described in detail with reference to the accompanying drawings.

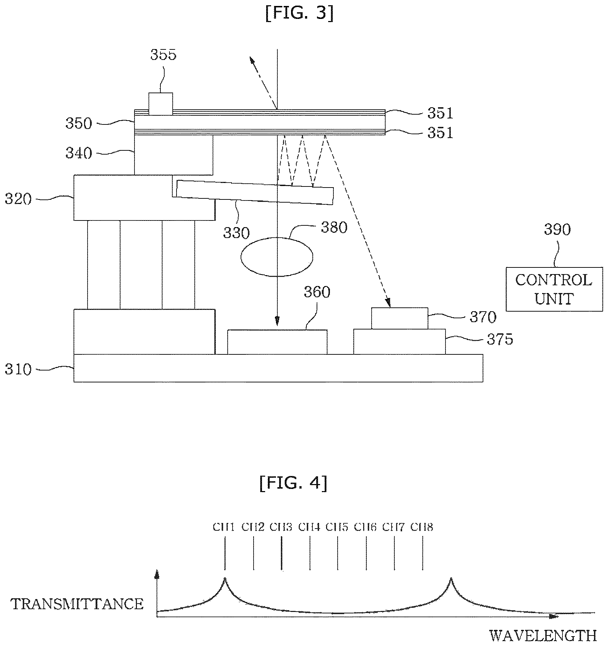

FIG. 3 is a view for describing an optical receiver and an optical module with multiple wavelength tunable filters according to an embodiment of the present disclosure.

Referring to FIG. 3, the optical receiver may include a substrate 310, a thermoelectric element 320, a first wavelength tunable filter 330, a heat shielding member 340, a second wavelength tunable filter 350, a first detector 360, a second detector 370, a lens 380, and a control unit 390. In the present disclosure, the optical module may include the substrate 310, the thermoelectric element 320, the first wavelength tunable filter 330, the heat shielding member 340, the second wavelength tunable filter 350, the first detector 360, the second detector 370, and the lens 380.

The thermoelectric element 320 may indicate an element that utilizes a thermoelectric phenomenon and have a PN junction pair by joining a P-type thermoelectric element and an N-type thermoelectric element between metal electrodes. For example, the thermoelectric element 320 may indicate an element capable of cooling or heating by utilizing the Peltier effect, a phenomenon in which heat is absorbed or generated by an electric current.

The thermoelectric element 320 may be disposed above the substrate 310 and have a changeable temperature. For example, a wavelength transmitted from the first wavelength tunable filter 330 or the second wavelength tunable filter 350 may be changed based on a temperature change occurring in the thermoelectric element 320.

A shape of the thermoelectric element 320 may be implemented in various ways other than its shape shown in FIG. 3.

The first wavelength tunable filter 330 may have one end disposed on one side of the thermoelectric element 320 and the other end inclined by being disposed lower than the plane of the thermoelectric element 320. The inclination of the first wavelength tunable filter 330 may be implemented at an angle that enables a process in which a signal transmitted through the second wavelength tunable filter 350 is reflected from an upper surface of the first wavelength tunable filter 330 and then reflected again from a lower surface of the second wavelength tunable filter 350. For example, the first wavelength tunable filter 330 may be inclined downward by approximately 3 degrees based on the plane of the thermoelectric element 320. In this case, the signal reflected on the upper surface of the first wavelength tunable filter 330 and incident on the second wavelength tunable filter 350 may have an incident angle of 6 degrees, thus allowing the second wavelength tunable filter 350 to reflect the largest amount of signal. Here, the first wavelength tunable filter 330 is described as being inclined downward by approximately 3 degrees based on the plane of the thermoelectric element 320, and this inclination may be implemented in various ways, such as angles ranging from 1 to 5 degrees. The first wavelength tunable filter 330 may be inclined to enable the repetition of the process in which the signal, incident vertically and transmitted through the second wavelength tunable filter 350, is reflected on the upper surface of the first wavelength tunable filter 330 and then reflected again on the lower surface of the second wavelength tunable filter 350, and the angle may be implemented in various ways.

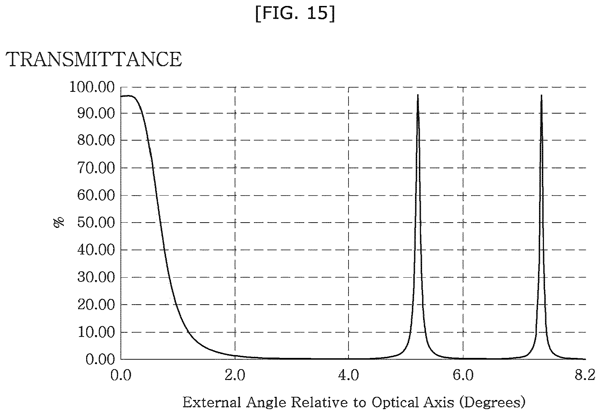

FIG. 15 is a view for describing transmittance of the optical signal based on the incident angle relative to an optical axis of the second wavelength tunable filter.

Referring to FIGS. 3 and 15, when the signal transmitted vertically through the second wavelength tunable filter 350 is reflected by the first wavelength tunable filter 330, which has an inclination of three degrees relative to the second wavelength tunable filter 350, its reflection angle may be deviated 6 degrees vertically from the second wavelength tunable filter 350. Referring to FIG. 15, it may be confirmed that the signal deviated by an angle of 6 degrees is not transmitted through the second wavelength tunable filter 350 and is reflected. Here, the reflection angle may be implemented in various ways.

The first wavelength tunable filter 330 may selectively transmit only a signal corresponding to one channel among multiple-channel signals transmitted through the second wavelength tunable filter 350, which are changed based on a temperature of the thermoelectric element 320, among the signals received from the outside.

The heat shielding member 340 may be disposed between the top of the thermoelectric element 320 and the bottom of the second wavelength tunable filter 350, and impede heat generated by a heater 355 disposed on one side of the second wavelength tunable filter 350 from being transferred to the thermoelectric element 320. Physically, a solid is unable to completely prevent the heat transfer, and a material having low thermal conductivity may impede heat generated by the heater 355 from being transferred to the thermoelectric element 320. The heat shielding member 340 may impede the heat transfer in this way, thereby producing a temperature difference between the thermoelectric element 320 and the heater 355. The second wavelength tunable filter 350 may be regulated to a temperature independent of the first wavelength tunable filter 330 by utilizing the temperature difference that occurs between the thermoelectric element 320 and the heater 355. Therefore, the heat shielding member 340 does not need to completely block heat, and only needs to have a heat transfer rate capable of producing the temperature difference between the thermoelectric element 320 and the heater 355. For example, the heat shielding member 340 may be made of a material such as glass or quartz, and implemented using a material having a heat transfer rate of 0.1 W/mK to 30 W/mK.

The second wavelength tunable filter 350 may be disposed above the first wavelength tunable filter 330 and disposed at one side of the thermoelectric element 320. As an example, if the heat shielding member 340 is not present, the first wavelength tunable filter 330 may be disposed on a side of the thermoelectric element 320, while the second wavelength tunable filter 350 may be disposed on the upper surface of the thermoelectric element 320, thereby being spaced apart from each other. As yet another example, if the heat shielding member 340 is present, the first wavelength tunable filter 330 may be disposed on the upper surface or the side of the thermoelectric element 320, while the second wavelength tunable filter 350 may be disposed on top of the heat shielding member 340, thereby being spaced apart from each other. In addition to the arrangement described above, the second wavelength tunable filter 350 may be disposed above and spaced apart from the first wavelength tunable filter 330 in various ways.

The second wavelength tunable filter 350 may transmit the signal only at a second wavelength, which is changed based on the temperature of the thermoelectric element 320 among the signals received from the outside and repeated at regular intervals. For example, the second wavelength tunable filter 350 may transmit the multiple-channel signal among N reception-channel signals. The multiple-channel signal may be transmitted unintentionally if a designer or the like adjusts the wavelength interval of a wavelength signal from the second wavelength tunable filter 350. Alternatively, the designer may intentionally adjust the wavelength interval of the wavelength signal from the second wavelength tunable filter 350 so that the multiple-channel signal may be transmitted.

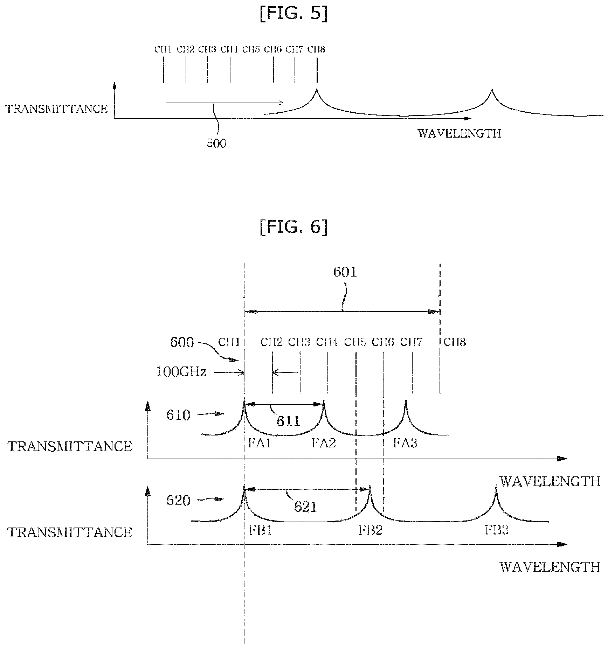

The first wavelength tunable filter 330 may have a first wavelength interval smaller than an entire wavelength interval between N reception channels, and the second wavelength tunable filter 350 may have a second wavelength interval smaller than the wavelength interval between the N reception channels. Here, the first wavelength interval and the second wavelength interval may be different from each other. Its details are described below with reference to FIG. 6.

The wavelength from the first wavelength tunable filter 330 may be determined based on the temperature change by the thermoelectric element 320, and the wavelength from the second wavelength tunable filter 350 may be determined based on temperature changes by the thermoelectric element 320 and the heater 355.

The heater 355 may be disposed on one side of the second wavelength tunable filter 350 and regulate the temperature of the second wavelength tunable filter 350. For example, the heater 355 may be disposed in various locations, such as on the top or bottom of the second wavelength tunable filter 350.

A reflective coating layer 351 may be disposed on the upper part or lower part of the second wavelength tunable filter 350 to adjust a transmittance line width of the second wavelength tunable filter 350. As an example, the reflective coating layer 351 may be disposed the partial upper part or lower part of the second wavelength tunable filter 350 (for example, excluding a region where the heater 355 is disposed). As another example, the reflective coating layer 351 may be disposed on the entire upper part or lower part of the second wavelength tunable filter 350.

There is no significant problem even if the reflective coating layer 351 is disposed on the entire upper or lower part of the second wavelength tunable filter 350 or on its partial upper or lower part. However, if the heater 355 is disposed on top of the reflective coating layer 351 disposed on the upper part of the second wavelength tunable filter 350, heat generated by the heater 355 may be impeded from being transferred to the second wavelength tunable filter 350. Accordingly, unnecessary energy loss may occur in adjusting the temperature of the second wavelength tunable filter 350, and a temperature of the heater 355 may be excessively increased compared to that of the second wavelength tunable filter 350, which may damage the stability of the heater 355. Therefore, it is more preferable for the heater 355 to be in direct contact with the upper part of the second wavelength tunable filter 350, and for the reflective coating layer 351 to be disposed excluding the region where the heater 355 is disposed.

In addition, the reflective coating layer 351 may include a material having low thermal conductivity, such as silicon nitride (SiNx), silicon dioxide (SiO₂), or aluminum oxide (Al₂O₃). Accordingly, the reflective coating layer 351 may produce an additional temperature difference between the thermoelectric element 320 and the heater 355, independently of the heat shielding member 340. Accordingly, the reflective coating layer 351 disposed at a lower layer of the second wavelength tunable filter 350 may have an effect equivalent to that of the heat shielding member 340.

The first detector 360 may be disposed on the substrate 310 while being spaced apart from the thermoelectric element 320. The first detector 360 may be disposed on the optical axis of the received signal. The second wavelength tunable filter 350 may transmit the multiple-channel signals among the N reception-channel signals being received, and the first wavelength tunable filter 330 may transmit only one channel among the multiple-channel signals transmitted through the second wavelength tunable filter 350. Accordingly, the first detector 360 may detect a signal corresponding to one channel transmitted through the first wavelength tunable filter 330.

The first detector 360 may be used to detect a specific-channel signal transmitted through both the wavelength tunable filters 330 and 350 among the signals received from the outside.

For example, the first detector 360 may detect a corresponding signal if the signal of the wavelength corresponding to a first channel among the eight reception channels is transmitted through the first wavelength tunable filter 330 and the second wavelength tunable filter 350. Similarly, the first detector 360 may detect signals corresponding to the second to eighth channels as the wavelength transmitted through the wavelength tunable filters 330 and 350 is changed based on the temperature change.

The second detector 370 may be disposed above the substrate 310 while being spaced apart from the first detector 360, and detect the signal transmitted to the second wavelength tunable filter 350 and then reflected from the first wavelength tunable filter 330.

The second detector 370 may detect the corresponding signal by being disposed on a path of the signal ultimately going downward after repeating the process in which the signal transmitted through the second wavelength tunable filter 350 is reflected from the upper surface of the first wavelength tunable filter 330 and then reflected from the lower surface of the second wavelength tunable filter 350. For this purpose, a right end of the first wavelength tunable filter 330 may preferably be disposed inside a right end of the second wavelength tunable filter 350. In other words, the right end of the second wavelength tunable filter 350 may preferably be disposed outside (on the right side in the drawing) than on the right end of the first wavelength tunable filter 330.

The second detector 370 may be used to monitor whether a signal is generated that is transmitted through the second wavelength tunable filter 350 and not transmitted through the first wavelength tunable filter 330.

A trans-impedance amplifier (TIA) 375 may be disposed on top of the substrate 310. The second detector 370 may be disposed on top of the trans-impedance amplifier 375.

The lens 380 may be disposed between the first wavelength tunable filter 330 and the first detector 360, and cause a parallel optical signal transmitted through the first wavelength tunable filter 330 and the second wavelength tunable filter 350 to converge and be incident on the first detector 360.

The transmittance of the wavelength tunable filter may be related to an angle of light incident on the filter, and accordingly, the light transmitting through the wavelength tunable filter may preferably be a parallel beam. However, a Gbps-class high-speed optical detector may have a diameter smaller than 20 um, and the lens 380 may thus be needed to converge the light transmitted through the wavelength tunable filter into an active region of the first optical detector 360 as the parallel beam.

The control unit 390 may determine which of the first wavelength tunable filter 330 and the second wavelength tunable filter 350 the signal is transmitted through, based on the signals detected by the first detector 360 and the second detector 370.

The control unit 390 may determine that a signal corresponding to any one of the N reception channels is not transmitted through the second wavelength tunable filter if the signal is detected by neither the first detector 360 nor the second detector 370. In other words, the control unit 390 may determine that the received signal is not transmitted though any of the wavelength tunable filters.

The control unit 390 may determine that the signal corresponding to any one of the N reception channels is transmitted through the second wavelength tunable filter 350 rather than through the first wavelength tunable filter 330 if the signal is detected by the second detector 370 rather than by the first detector 360. In other words, the control unit 390 may determine that the received signal is transmitted through the second wavelength tunable filter 350 rather than through the first wavelength tunable filter 330. In other words, the above-mentioned situation indicates that the received signal of the specific-wavelength channel is transmitted through the second wavelength tunable filter 350 rather than through the first wavelength tunable filter 330.

The control unit 390 may determine that the signal corresponding to any one of the N channels being received is normally received by being transmitted through both the first wavelength tunable filter 330 and the second wavelength tunable filter 350 if the signal is detected by the first detector 360 rather than by the second detector 370. In other words, the control unit 390 may determine that the signal being detected by the first detector 360 indicates that the signal corresponding to a specific channel is normally detected because the corresponding signal is transmitted through both the first wavelength tunable filter 330 and the second wavelength tunable filter 350. Therefore, the signal may not be detected by the second detector 370 because the signal corresponding to a specific channel is not reflected from the first wavelength tunable filter 330.

Here, the signal not being detected by the detector does not indicate that no signal is detected at all. The reason is that the wavelength tunable filter has certain transmission characteristics even in a wavelength region blocked by the wavelength tunable filter. Accordingly, rather than detecting the signal based on whether or not the signal is received, the detector may determine that the signal is detected normally if an intensity of the received signal is higher than a predetermined threshold value, and that the signal is not detected normally if the intensity is lower than the predetermined threshold value. That is, the detector may determine whether the received signal is detected normally based on its intensity.

The control unit 390 may change the wavelength of the second wavelength tunable filter 350 by changing the temperatures of the thermoelectric element 320 and the heater 355 until the signal is detected by the second detector 370, and set a temperature of the second wavelength tunable filter 350 at which the signal is detected by the second detector 370 to its set temperature. For example, the control unit 390 may continuously change the wavelength of the second wavelength tunable filter 350 by changing the temperature of the thermoelectric element 320 from 38 degrees and changing the temperature of the heater 355. The control unit 390 may detect the temperature at which the signal is detected by the second detector 370 (for example, the corresponding temperature may be 42 degrees) by changing the temperature of the heater 355, and set the temperature of the second wavelength tunable filter 350 at which the signal is detected (for example, 42 degrees) to its set temperature.

The control unit 390 may then continuously change the temperature of the thermoelectric element 320 by controlling the second wavelength tunable filter to maintain the set temperature (for example, 42 degrees) using the heater 355 until the signal ("the signal transmitted through the second wavelength tunable filter 350 and then also transmitted through the first wavelength tunable filter 330") is detected by the first detector 360. The control unit 390 may detect a temperature at which the signal is detected by the first detector 360 (for example, the corresponding temperature may be 40 degrees) by changing the temperature of the thermoelectric element 320 (for example, increasing or decreasing the temperature from 38 degrees, where the term 'degree' may be expressed in Celsius or Fahrenheit), and set the temperature of the first wavelength tunable filter 330 at which the signal is detected (for example, 40 degrees) to its set temperature.

FIGS. 4 and 5 are views for describing a process of selecting the wavelength using one wavelength tunable filter, and FIG. 6 is a view for describing a process of selecting the wavelength using the multiple wavelength tunable filters.

Referring to FIGS. 3, 4 and 5, when one wavelength tunable filter is used for 8 channels CH1, CH2, CH3, CH4, CH5, CH6, CH7, and CH8, the wavelength interval of the corresponding wavelength tunable filter needs to be larger than the entire wavelength interval of the eight channels. The wavelength tunable filter (for example, etalon filter) may have a transmittance wavelength change based on a temperature of 10GHz/°C. In this case, the wavelength interval between channel 1 and channel 8 may be 700 GHz, and the temperature of the wavelength tunable filter needs to be changed by at least 70°C (i.e., temperature difference required to change from CH1 to CH8) in order to receive all the reception channels. If CH1 is set to 40 degrees, CH8 may have a temperature of 110 degrees. Such a larger temperature change may cause issues in the reliability of the optical receiver.

On the other hand, referring to FIGS. 3 and 6, the present disclosure corresponds to the case where the multiple wavelength tunable filters (for example, two filters) are used for the eight channels CH1, CH2, CH3, CH4, CH5, CH6, CH7, and CH8.

A wavelength signal 610 from the first wavelength tunable filter 330 may have high transmittance periodically at wavelengths FA1, FA2, and FA3, and the wavelength signal 610 may have a first wavelength interval 611 smaller than an entire wavelength interval 601 of eight reception channels 600.

A wavelength signal 620 from the second wavelength tunable filter 350 may have high transmittance periodically at wavelengths FB1, FB2, and FB3, and the wavelength signal 620 may have a second wavelength interval 621 smaller than the entire wavelength interval 601 of the eight reception channels 600. Here, the first wavelength interval 611 and the second wavelength interval 621 may be different from each other.

The second wavelength tunable filter 350 needs to transmit only one channel (for example, "CH1"). However, referring to FIG. 6, when adjusting the interval of the wavelength signals 620, the signal of the first channel (for example, "CH1") may be transmitted at the wavelength FB1, and some signals of the fifth channel and the sixth channel may be transmitted at the wavelength FB2 ("existing between the fifth channel and the sixth channel"). In this case, the detector may not determine exactly which channel signal is received because the detector detects two signals ("first channel signal / signal between the fifth channel and the sixth channel").

Accordingly, in the wavelength signal 610 from the first wavelength tunable filter 330 in this embodiment, only one of the two signals ("first channel signal / signal between the fifth channel and the sixth channel") may be transmitted through the second wavelength tunable filter 350. For example, the wavelength signal 610 from the first wavelength tunable filter 330 may have the second wavelength interval 621, which is different from the first wavelength interval 611, and it is possible to transmit the signal corresponding to the first channel ("at the wavelength FA1") and block the signal between the fifth channel and the sixth channel ("at the wavelengths FA2 and FA3"). That is, in the wavelength signal 610 from the first wavelength tunable filter 330, only the signal corresponding to the first channel may be transmitted, and in this way, only one of the signals transmitted through the second wavelength tunable filter 350 may be received by the first detector 360.

In a process of changing the received channel signal, for example, if the first channel CH1 is set to be transmitted through all the filters, the temperatures of the first wavelength tunable filter 330 and the second wavelength tunable filter 350 may be adjusted so that one of the wavelengths FA1, FA2, and FA3 of the first wavelength tunable filter 330 and the wavelengths FB1, FB2, and FB3 of the second wavelength tunable filter 350 is moved to a wavelength corresponding to the first channel CH1, thus adjusting the signal corresponding to the first channel CH1 to be transmitted. It is possible to control the signal corresponding to each of the eight channels CH1, CH2, CH3, CH4, CH5, CH6, CH7, and CH8 to be transmitted by repeating the above-described process of adjusting the first wavelength tunable filter 330 and the second wavelength tunable filter 350. Accordingly, it is possible to prevent all the multiple signals transmitted through the second wavelength tunable filter 350 from being incident on the first detector 360 by using the first wavelength tunable filter 330 to transmit only one of the multiple signals transmitted through the second wavelength tunable filter 350.

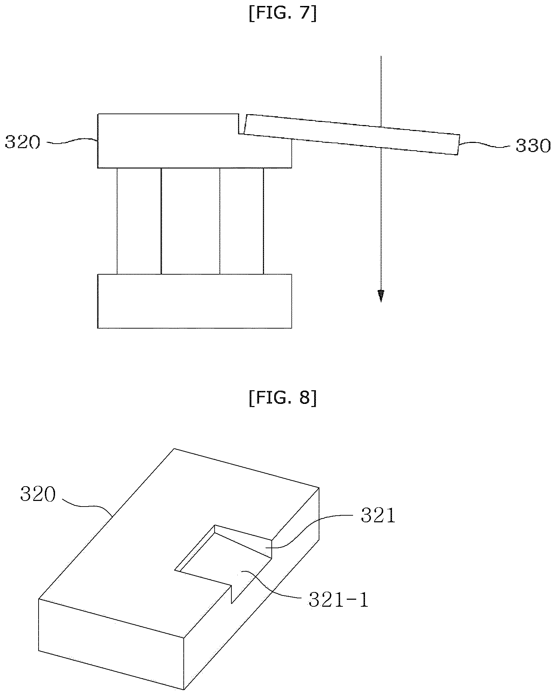

FIGS. 7, 8, and 9 are views for describing a coupling configuration of the thermoelectric element and the first wavelength tunable filter according to an embodiment of the present disclosure.

FIG. 7 is a cross-sectional view of the thermoelectric element according to this embodiment, and FIG. 8 is a perspective view of the thermoelectric element according to this embodiment.

Referring to FIGS. 7 and 8, the thermoelectric element 320 may include an accommodating groove 321 therein, the groove 321 including an accommodating groove inclination surface 321-1 inclined at a certain angle relative to plane of the thermoelectric element. The accommodating groove 321 may have a shape for accommodating the first wavelength tunable filter, and a position of the accommodating groove 321 may be implemented in various ways.

When the first wavelength tunable filter 330 is accommodated on the accommodating groove inclination surface 321-1 of the accommodating groove 321, the first wavelength tunable filter 330 may be inclined by the inclination of the inclination surface 321-1 relative to the plane of the thermoelectric element 320. Here, the first wavelength tunable filter 330 may be fixed using an epoxy such as H20E, which has a good heat transfer rate.

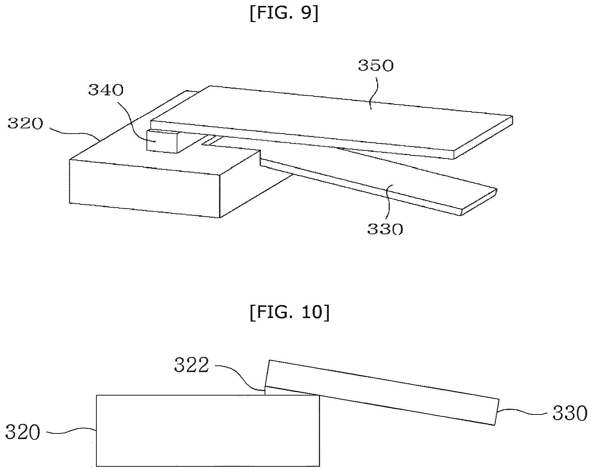

Referring to FIG. 9, the first wavelength tunable filter 330 may be disposed in the accommodating groove 321 of the thermoelectric element 320, the heat shielding member 340 may be disposed on top of the thermoelectric element 320, and the second wavelength tunable filter 350 may be disposed on top of the heat shielding member 340. Accordingly, the first wavelength tunable filter 330 may have the accommodating groove 321 coupled thereto and be disposed with a constant inclination, and the second wavelength tunable filter 350 may be disposed on top of the heat shield member 340 to be parallel to the plane of the thermoelectric element.

FIG. 10 is a side view for describing a coupling configuration of the thermoelectric element and the first wavelength tunable filter according to another embodiment of the present disclosure.

Referring to FIG. 10, the thermoelectric element 320 may include a protrusion 322 including a protrusion inclined surface inclined at a certain angle relative to the plane of the thermoelectric element. Here, the protrusion 322 may be disposed only in a partial region of the thermoelectric element 320 or may be long in a specific length direction.

The first wavelength tunable filter 330 may be inclined with respect to the plane of the thermoelectric element 320 by being coupled with the protrusion inclined surface of the protrusion 322.

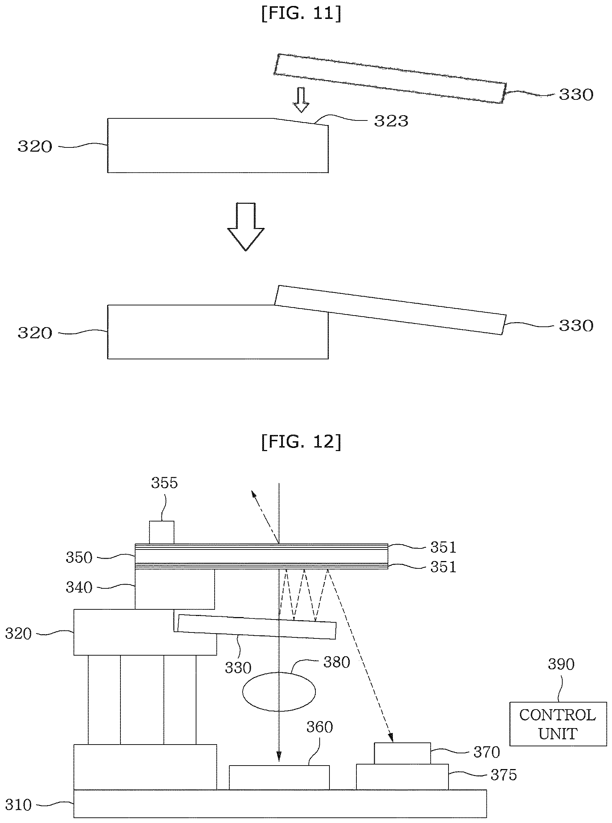

FIG. 11 is a side view for describing a coupling configuration of the thermoelectric element and the first wavelength tunable filter according to yet another embodiment of the present disclosure.

Referring to FIG. 11, the thermoelectric element 320 may include an inclined surface 323 disposed on one side of the thermoelectric element and inclined at a certain angle relative to the plane of the thermoelectric element. Here, the inclined surface may be disposed only in a partial region of the thermoelectric element 320 or may be long in the specific length direction.

The first wavelength tunable filter 330 may be inclined with respect to the plane of the thermoelectric element 320 by being coupled with the inclined surface 333.

FIG. 12 is a view for describing an optical receiver and an optical module with multiple wavelength tunable filters according to another embodiment of the present disclosure.

Referring to FIGS. 11 and 12, the second wavelength tunable filter 350 may have the reflective coating layer 351 formed on its upper and lower parts, and the heater 355 may be disposed on the reflective coating layer 351 disposed on the upper part of the second wavelength tunable filter 350.

The remaining configurations are the same as those shown in FIG. 11, and their descriptions are therefore omitted.

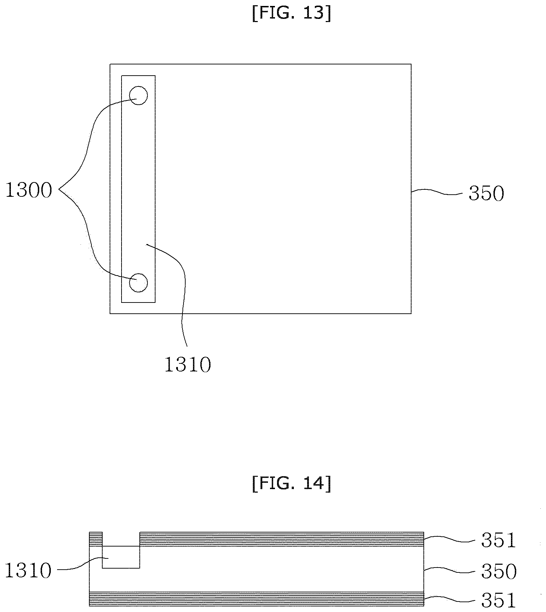

FIGS. 13 and 14 are views for describing a resistor formed in the second wavelength tunable filter according to an embodiment of the present disclosure.

Referring to FIGS. 13 and 14, the second wavelength tunable filter 350 may include a conductive resistor 1310 disposed around an electrode 1300 while being disposed at a position corresponding to the lower surface of the heater 355. For example, the second wavelength tunable filter 350 may be made of a material such as silicon, and specifically, the second wavelength tunable filter 350 may be made of a substrate of low doped, un-doped, or semi-insulating silicon. Here, the conductive resistor 1310 may be made by ion implantation or diffusion.

The conductive resistor 1310 may have an electrical resistance lower than that of the second wavelength tunable filter 350, which is made of the low-doped or un-doped semi-insulating silicon. Accordingly, the conductive resistor 1310 may conduct electricity better than the second wavelength tunable filter 350, which has a relatively high electrical resistance. In this way, the electric current generated by the electrode 1300 may be prevented from spreading toward the second wavelength tunable filter 350, and the electric current and the heat generated by the electric resistor may thus remain around the electrode 1300.

As described above, the heat generation area may be limited to the conductive resistor 1310 by forming the conductive resistor 1310, thus allowing the heat to be generated only around the electrode 1300.

In addition, the second wavelength tunable filter 350 may include a ("cantilever-shaped") region that protrudes outward ("to the right side in the drawing") from the thermoelectric element 320, and the region corresponding to the cantilever-shaped region may correspond to the region for transmitting the received signal. The cantilever-shaped region may float in the air, thus allowing little heat to be released to the outside. Accordingly, the cantilever-shaped region may maintain a constant temperature without any temperature difference ("the temperature change") because there is no generation or destruction of heat. This configuration may be explained by a basic principle of thermodynamics, which states that if there is no generation or destruction of heat, dQ = 0, and therefore, dT also becomes 0. In this way, it is possible to improve the temperature uniformity of the cantilever-shaped region ("light transmittance region") in the second wavelength tunable filter 350.

As set forth above, the present disclosure may use the multiple wavelength tunable filters to thus reduce the temperature change degree of the wavelength tunable filter, thereby increasing the reliability of the optical reception device.

The present disclosure may implement the wavelength intervals of the multiple wavelength tunable filters to be different from each other, thereby preventing the signals corresponding to the two channels from transmitting through the multiple wavelength tunable filters simultaneously.

All or some of the respective embodiments may be selectively combined with each other so that the above-mentioned embodiments may be variously modified.

Further, it should be noted that the embodiments are provided in order to describe the present disclosure rather than limiting the present disclosure. In addition, an expert in a technical field of the present disclosure will understand that various embodiments are possible within the spirit and scope of the present disclosure.

## Claims

1. An optical module with multiple wavelength tunable filters, the module comprising:
a thermoelectric element disposed on a substrate and having a changeable temperature;
a first wavelength tunable filter having one end disposed on one side of the thermoelectric element and the other end inclined by being disposed lower than a plane of the thermoelectric element, and configured to transmit only a first wavelength of a received signal that is changed based on the temperature of the thermoelectric element;
a second wavelength tunable filter including a heater disposed at one side, disposed on the one side of the thermoelectric element while being disposed above the first wavelength tunable filter, and configured to transmit only a second wavelength of the received signal that is changed based on temperatures of the thermoelectric element and the heater;
a first detector disposed on the substrate while being spaced apart from the thermoelectric element, disposed on an optical axis of the received signal, and configured to detect a signal corresponding to one channel transmitted through the first wavelength tunable filter among multiple-channel signals being transmitted through the second wavelength tunable filter, the multiple-channel signals being transmitted therethrough among N reception-channel signals being received; and
a second detector disposed above the substrate while being spaced apart from the first detector, and configured to detect the signal transmitted through the second wavelength tunable filter and then reflected from the first wavelength tunable filter.

2. The module of claim 1, wherein the thermoelectric element includes an inclined surface disposed on the one side of the thermoelectric element and inclined at a certain angle relative to the plane of the thermoelectric element, and
the first wavelength tunable filter is inclined by being coupled with the inclined surface.

3. The module of claim 1, wherein the thermoelectric element includes an accommodating groove therein, the groove having an accommodating groove inclination surface inclined at a certain angle relative to the plane of the thermoelectric element, and
the first wavelength tunable filter is inclined by being accommodated on the accommodating groove inclination surface.

4. The module of claim 1, wherein the thermoelectric element includes a protrusion including a protrusion inclined surface inclined at a certain angle relative to the plane of the thermoelectric element, and
the first wavelength tunable filter is inclined by being coupled with the protrusion inclined surface.

5. The module of claim 1, wherein the second detector is disposed on a path of the signal ultimately going downward after repeating a process in which the signal transmitted through the second wavelength tunable filter is reflected from an upper surface of the first wavelength tunable filter and then reflected from a lower surface of the second wavelength tunable filter because the first wavelength tunable filter is inclined.

6. The module of claim 1, wherein the first wavelength tunable filter has a first wavelength interval smaller than an entire wavelength interval between N reception channels, and
the second wavelength tunable filter has a second wavelength interval smaller than the wavelength interval between the N reception channels,
the first wavelength interval and the second wavelength interval being different from each other.

7. The module of claim 1, wherein the heater is configured to regulate a temperature of the second wavelength tunable filter.

8. The module of claim 7, wherein the heater is in direct contact with the second wavelength tunable filter, and
the second wavelength tunable filter further includes a reflective coating layer disposed on the upper part or lower part of the second wavelength tunable filter, excluding a region where the heater is disposed.

9. The module of claim 7, wherein the second wavelength tunable filter further includes a reflective coating layer disposed on at least one of the upper part and lower part of the second wavelength tunable filter, and
the heater is disposed on the reflective coating layer.

10. The module of claim 7, wherein the second wavelength tunable filter further includes
an electrode disposed at a position corresponding to a lower surface of the heater and connected to the heater, and
a conductive resistor having an electric resistance lower than that of the second wavelength tunable filter, and disposed around the electrode while being disposed at a position corresponding to the lower surface of the heater.

11. The module of claim 7, further comprising a heat shielding member disposed between the top of the thermoelectric element and the bottom of the second wavelength tunable filter, and configured to impede heat generated by the heater from being transferred to the thermoelectric element, thereby producing a temperature difference between the thermoelectric element and the heater.

12. The module of claim 7, wherein the wavelength of the first wavelength tunable filter is determined based on a temperature change by the thermoelectric element, and
the wavelength of the second wavelength tunable filter is determined based on temperature changes by the thermoelectric element and the heater.

13. An optical receiver with multiple wavelength tunable filters, the receiver comprising:
a thermoelectric element disposed on a substrate and having a changeable temperature;
a first wavelength tunable filter having one end disposed on one side of the thermoelectric element and the other end inclined by being disposed lower than a plane of the thermoelectric element, and configured to transmit only a first wavelength of a received signal that is changed based on the temperature of the thermoelectric element;
a second wavelength tunable filter including a heater disposed at one side, disposed on the one side of the thermoelectric element while being disposed above the first wavelength tunable filter, and configured to transmit only a second wavelength of the received signal that is changed based on temperatures of the thermoelectric element and the heater;
a first detector disposed on the substrate while being spaced apart from the thermoelectric element, disposed on an optical axis of the received signal, and configured to detect a signal corresponding to one channel transmitted through the first wavelength tunable filter among multiple-channel signals being transmitted through the second wavelength tunable filter, the multiple-channel signals being transmitted therethrough among N reception-channel signals being received;
a second detector disposed above the substrate while being spaced apart from the first detector, and configured to detect the signal transmitted through the second wavelength tunable filter and then reflected from the first wavelength tunable filter; and
a control unit configured to determine which of the first wavelength tunable filter and the second wavelength tunable filter the signal is transmitted through, based on the signals detected by the first detector and the second detector.

14. The receiver of claim 13, wherein the control unit is configured to
determine that the signal corresponding to any one of N reception channels is not transmitted through the second wavelength tunable filter if the signal is detected by neither the first detector nor the second detector,
determine that the signal corresponding to any one of the N reception channels is transmitted through the second wavelength tunable filter rather than through the first wavelength tunable filter if the signal is detected by the second detector rather than by the first detector, and
determine that the signal corresponding to any one of the channels is normally received by being transmitted through both the first wavelength tunable filter and the second wavelength tunable filter if the signal is detected by the first detector rather than by the second detector.

15. The receiver of claim 13, wherein the control unit is configured to
change the wavelength of the second wavelength tunable filter by changing the temperatures of the thermoelectric element and the heater until the signal is detected by the second detector, set a temperature of the second wavelength tunable filter at which the signal is detected by the second detector to its set temperature,
then change the temperature of the thermoelectric element until the signal is detected by the first detector by being transmitted through the second wavelength tunable filter and then also through the first wavelength tunable filter while controlling the set temperature of the second wavelength tunable filter to be maintained using the heater, and
set a temperature of the first wavelength tunable filter at which the signal is detected by the first detector to its set temperature.
